# EUROPÄISCHE PATENTSCHRIFT

(11) **EP 0 692 444 B1**
(45) Veröffentlichungstag und Bekanntmachung des Hinweises auf die Patenterteilung: **17.06.1998**
(21) Anmeldenummer: 95110545.1
(22) Anmeldetag: 06.07.1995
(51) Int. Cl.: B65H 19/29, C09J 11/04

(54) **Material für das Befestigen eines Anfanges einer Vorratspapierbahnrolle**
Material for attaching the leading end of a roll of paper web
Matériau pour la fixation du début d'un rouleau de bande de papier

(30) Priorität: 14.07.1994 DE 4424657
(43) Veröffentlichungstag der Anmeldung: 17.01.1996
(73) Patentinhaber: KOENIG & BAUER-ALBERT AKTIENGESELLSCHAFT, 97080 Würzburg (DE)
(72) Erfinder: Ruckmann, Wolfgang Günter, D-97074 Würzburg (DE); Röder, Klaus Walter, D-97074 Würzburg (DE)

(56) Entgegenhaltungen:
- EP-A- 0 189 582
- DE-A- 2 155 352
- DE-A- 4 225 465
- GB-A- 1 087 815
- GB-A- 2 257 931
- PATENT ABSTRACTS OF JAPAN vol. 5 no. 128 (C-067) ,18.August 1981 & JP-A-56 062863 (IG TECH RES INC.) 29.Mai 1981,

## Beschreibung

Die Erfindung betrifft eine Vorratspapierbahnrolle entsprechend dem Oberbegriff des Anspruches 1.

Durch die DE 41 18 690 C2 ist ein Verfahren nebst einer zugehörigen Vorrichtung zur Vorbereitung einer Klebestelle einer Bedruckstoffbahnrolle für den fliegenden Rollenwechsel bekannt, wobei der Anfang der ersten Lage der Vorratspapierbahnrolle parallel und in einem bestimmten Abstand zu seinem Anfang eine Perforation erhält. Zwischen Perforation und dem Anfang der Papierbahn wird ein Halteklebemittel aufgebracht, welches den Anfang der ersten Lage der Vorratspapierbahnrolle auf der zweiten Lage der Vorratspapierbahnrolle festlegt. Ein von dem Anfang der ersten Lage der Vorratspapierbahnrolle aus gesehen, hinter der Perforation auf die Außenseite der ersten Lage der Papierbahn aufgebrachtes Verbindungsklebemittel ist für das Ankleben der neuen Vorratspapierbahnrolle an die zu Ende gehende Papierbahnrolle vorgesehen.

Nachteilig ist dabei jedoch, daß nicht festgestellt werden kann, ob tatsächlich eine Halteklebemittel auf den Anfang der Vorratspapierbahnrolle aufgetragen worden ist, so daß ggf. aus diesem Grunde ein Verbinden der Papierbahnen nicht zustande kommt.

Die DE-OS 21 55 352 beschreibt Befestigungsmittel, z. B. Heißschmelzkleber für das Befestigen eines Anfanges einer Vorratspapierbahnrolle auf einer zweiten Lage der Papierbahn durch eine zusammenhängende oder unterbrochene Klebstoffbahn.

Der Erfindung liegt die Aufgabe zugrunde, eine Vorratspapierbahnrolle mit einem Befestigungsmittel für das Befestigen eines Anfanges zu schaffen, welches mittels Sensoren erfaßbar ist.

Erfindungsgemäß wird diese Aufgabe durch die Merkmale des kennzeichnenden Teils des Anspruches 1 gelöst.

Durch die Erfindung werden insbesondere folgende Vorteile erzielt: Infolgedessen, daß den Befestigungsmitteln der Vorratspapierbahnrolle keramische Ferrit- oder Metallbestandteile bzw. Farbbestandteile beigefügt sind, kann mittels Sensoren und geeigneter Steuermittel das Vorhandensein der Befestigungsmittel auf der Vorratspapierbahnrolle festgestellt und nachfolgend ein Verbindungsklebemittel aufgebracht werden, so daß auch eine selbsttätige Verbindungsklebung erfolgreich durchgeführt werden kann. Darüberhinaus ist es noch möglich, das Vorhandensein von Leimpartikeln infolge des Verbindens der Papierbahnen auf bereits fertiggefalzten Druckerzeugnissen festzustellen, so daß zur Aussonderung derartiger fehlerhafter Erzeugnisse die Auslösung einer sogenannten Makulaturweiche veranlaßt werden kann.

Die Erfindung wird nachfolgend an mehreren Ausführungsbeispielen näher erläutert. Die zugehörigen Zeichnungen zeigen in
- Fig. 1: eine ausschnittsweise Ansicht auf den Anfang einer Vorratspapierbahnrolle mit Darstellung einer Klebestelle,
- Fig. 2: eine ausschnittsweise Ansicht auf den Anfang einer Vorratspapierbahnrolle mit Darstellung eines zweiten Ausführungsbeispiels einer Klebestelle,
- Fig. 3: eine ausschnittsweise Ansicht auf den Anfang einer Vorratspapierbahnrolle mit Darstellung eines dritten Ausführungsbeispiels einer Klebestelle.

Eine nichtdargestellte Vorratspapierbahnrolle als neue Vorratsrolle zum Verbinden mit der Papierbahn einer nahezu abgelaufenen Papierbahnrolle weist an ihrer äußersten, d. h. ersten Lage 2 eine parallel zu einer Rotationsachse der Papierbahnrolle verlaufenden Anfang 6 auf.

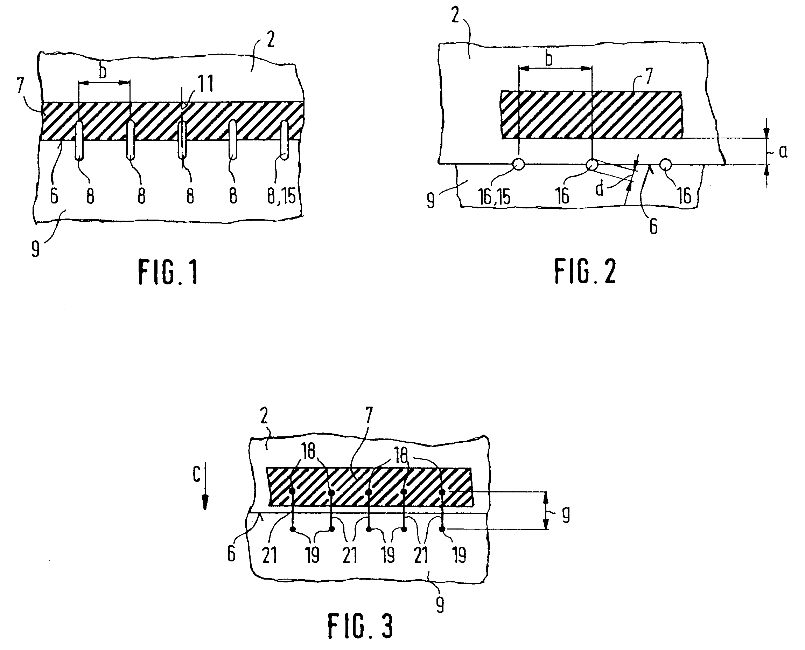

Der Anfang 6 der ersten Lage 2 der Papierbahn ist mittels einer Anzahl von aus Heißschmelzkleber 15 bestehenden Tropfen 16 auf der zweiten Lage 9 der Papierbahn befestigt. Mehrere dieser Tropfen 16 sind in Papierlaufrichtung gesehen hintereinander fadenförmig angeordnet, so daß sich eine Fadenform 8 (Fig. 1) ausbildet, welche teilweise, vorzugsweise zur Hälfte, sowohl auf dem Anfang 6 der ersten Lage 2 der Papierbahn als auch teilweise auf der zweiten Lage 9 der Papierbahn angeordnet ist. Längsachsen 11 durch die Fäden 8 verlaufen dabei parallel zu seitlichen Rändern der Papierbahnrolle. Die Fäden 8 sind über die gesamte Breite der Papierbahnrolle in einem Abstand b zueinander angeordnet. Der Abstand b kann entsprechend der Grammatur des zu verarbeitenden Papiers frei gewählt werden. Eine Länge l der Fäden 8 kann bis zu einer Breite eines streifenförmigen Verbindungsklebemittels 7 betragen. Der zu verwendende Heißschmelzkleber 15 sollte zu 100 Prozent aus festen Bestandteilen bestehen, kein Wasser sowie keine flüchtigen oder brennbaren Lösungen enthalten, nach dem Auftragen bei Raumtemperatur schnell erstarren, somit schnell Anziehen und eine minimale Schrumpfung aufweisen. Der Heißschmelkleber 15 weist einen Anteil keramischer Ferritbestandteile oder Metallbestandteile in einer solchen Menge auf, daß deren Anwesenheit durch Sensoren ermittelt werden kann.

Der Heißschmelzkleber 15 kann manuell mit einer Klebepistole oder mit einfachen mechanischen Auftragsvorrichtungen aufgebracht werden, vorzugsweise in einer zentralen Fertigungsstätte.

Parallel zum Anfang 6 der ersten Lage 2 der Papierbahn ist ein streifenförmiges Verbindungsklebemittel 7 für das Verbinden des Anfanges 6 der Vorratspapierbahnrolle mit der zu Ende gehenden Papierbahnrolle angeordnet. Dieses Verbindungsklebemittel 7 kann aus einem bekannten Leimauftrag oder aus einem bekannten doppelseitig klebendem Klebestreifen bestehen. Das Verbindungsklebemittel 7 kann mit einer seiner Längsseiten deckungsgleich zum Anfang 6 der ersten Lage 2 der Papierbahn verlaufen oder in einem gleichmäßigen Abstand a zum Anfang 6 der ersten Lage 2 der Papierbahn angeordnet sein (Fig. 2).

Bei einem zweiten Ausführungsbeispiel (Fig. 2) ist der Anfang 6 der Papierbahn mittels einer Anzahl in einem Abstand b voneinander angeordneten kreisförmiger Tropfen 16 aus Heißschmelzkleber 15 auf der zweiten Lage 9 der Papierbahn befestigt. Ein möglicher Abstand a des streifenförmigen Verbindungsklebemittels 7 zum Anfang 6 der Papierbahn kann bis zum Dreifachen eines Durchmessers d eines Tropfens 16 betragen. Ein Abstand b der Tropfen 16 untereinander kann ebenso wie im ersten Ausführungsbeispiel bemessen sein. Ebenso erfolgt das Aufbringen der Tropfen 16 wie im ersten Ausführungsbeispiel dargelegt. Ein streifenförmiges Verbindungsklebemittel 7 verläuft mit seiner papierbahnanfangsnahen Seite entweder deckungsgleich mit dem Anfang 6 der Papierbahn oder in einem Abstand a parallel zum Anfang 6. Auch hier weist der Heißschmelzkleber 15 einen Anteil keramischer Ferritbestandteile oder Metallbestandteile in einer solchen Höhe auf, daß deren Anwesenheit durch Sensoren ermittelt werden kann.

Bei einem dritten Ausführungsbeispiel ist vorgesehen, die Tropfen 18; 19 aus schnell erstarrendem Material 15 sowohl im Bereich des Anfanges 6 der Vorratspapierbahnrolle als auch auf der zweiten Lage 9 der Vorratspapierbahnrolle anzuordnen (Fig. 3). Dabei sind die Tropfen 18 sowohl in Vorratspapierbahnrollen-Längsachsenrichtung gesehen auf der ersten Lage 2 der Papierbahn als auch die Tropfen 19 auf der zweiten Lage 9 der Papierbahn voneinander beabstandet angeordnet. Auch in Transportrichtung C der Vorratspapierbahnrolle gesehen, diesseits und jenseits des Anfanges 6 der Papierbahn sind die Tropfen 18; 19 voneinander beabstandet g angeordnet. Die Tropfen 18; 19 können sich paarweise direkt (Fig. 3) oder auf "Lücke" versetzt gegenüberstehen. Die Tropfen 18; 19 können aus Heißschmelzkleber 15 bestehen, welchem ein solcher Anteil keramischer Ferritbestandteile oder Metallbestandteile beigemengt ist, daß deren Anwesenheit durch Sensoren ermittelt werden kann. Alle Tropfen 18; 19 sind durch Fäden 21 so miteinander verbunden, daß die Fäden 21 jeweils den Anfang 6 der Papierbahn übergreifen und auf der zweiten Lage 9 der Papierbahn festlegen. Die Fäden 21 können, in Papierlaufrichtung gesehen, gerade verlaufen und nur jeweils an zwei Tropfen 18; 19 befestigt sein (Fig. 3). Die Fäden 21 können einerseits vor dem Erstarren des schnell erstarrenden Materials, z. B. Heißschmelzkleber 15, in die Tropfen 18; 19 eingebracht werden. Andererseits ist es auch möglich, einen Faden zu verwenden, welcher mit einem Mantel aus schnell erstarrendem Material, z. B. Heißschmelzkleber 15, umgeben ist bzw. mit Partikeln aus Heißschmelzkleber 15 angereichert ist, so daß bei einem kraftschlüssigem Kontakt mit einem beheizten Werkzeug, z. B. einem Stempel, mit dem Faden 21 eine stoffschlüssige Verbindung zwischen Faden 21, Heißschmelzkleber 15 und Papierbahn 3, 9 hergestellt wird.

Die Fäden 21 können leicht reißend ausgebildet sein und z. B. aus Naturfasern, wie Baumwolle oder Seide bestehen, denen jeweils ein Anteil keramischer Ferritbestandteile beigefügt ist. Weiterhin ist es möglich, die Fäden 21 aus schwer reißendem Material, z. B. aus synthetischen Fasern, wie Nylon auszubilden, wobei eine Metalleinlage oder ein Metallfaden eingefügt ist. Bei den zuletzt genannten Fäden 21 reißen diese an einem von zwei sich gegenüberliegenden Tropfen 18; 19 ab. Auch ist es möglich, die Fäden 21 nur aus Heißschmelkleber 15 mit den genannten, durch Sensoren erkennbare Zusatzstoffe auszubilden. Weiterhin kann frei gewählt werden, ob nur der Heißschmelzkleber 15 oder nur die Fäden 21 oder ob beides zusammen mit sensorisch ermittelbaren Zusatzstoffen gleichzeitig eingesetzt werden sollen.

Das Verfahren läuft wie folgt ab: eine bereits an zentraler Stelle vorgefertigte, d. h. mit Befestigungsmitteln 8; 16; oder 18, 19, 21 versehene, den Anfang 6 der Papierbahn festgelegte Vorratspapierbahnrolle wird in einen Rollenwechsler eingebracht und solange gedreht, bis bekannte, nichtdargestellte Abtastmittel, z. B. Sensoren auf Grund der den Tropfen 16; 18, 19 oder Fäden 8; 21 beigefügten Zusätzen von keramischen Ferrit- oder Metallbestandteilen die Anwesenheit der genannten faden- oder tropfenförmigen Befestigungsmittel 8; 16; 18, 19, 21 feststellen. Durch nichtdargestellte, dem Fachmann geläufige elektrische Schalt- und Antriebsmittel wird eine entlang des Anfanges 6 der Papierbahn verfahrbare nichtdargestellte Leimauftragsvorrichtung, z. B. in Form auf einem Schlitten befindlichen Flachstrahldüsen-Sprüheinrichtung bewegt, welche einen aktiv klebenden Leimstreifen (Fig. 1 bis 3) als Verbindungsklebemittel 7 aufbringt. Der Anfang 6 der Papierbahn verläuft vorzugsweise in achsparalleler Richtung zur Vorratspapierbahnrolle. Danach kann in bekannter Weise, z. B. wie in der DE 42 10 329 A1 dargestellt, die Verbindungsklebung zwischen den zwei Papierbahnen erfolgen.

Alternativ zu den vorgenannten Leimstreifen, welcher mit einer Sprüheinrichtung aufgebracht wird, kann auch ein doppelseitig klebender Klebestreifen als Verbindungsklebemittel 7 aufgebracht werden.

Es ist weiterhin möglich, die Anwesenheit solcher bereits bedruckter und gefalzter Exemplare von Druckerzeugnissen festzustellen, die mit den faden- oder tropfenförmigen Befestigungsmitteln 8; 16; 18, 19, 21 versehen sind. Dazu können z. B. hinter dem Falzapparat einer Rollenrotationsdruckmaschine angeordnete Sensoren vorgesehen sein, welche über bekannte, nichtdargestellte, dem Fachmann geläufige elektrische Schalt- und Antriebsmittel eine sogenannte "Makulaturweiche" zum Aussondern dieser Druckerzeugnisse betätigen.

Ebenso ist es möglich, dem Heißschmelzkleber 15 statt keramischer Ferrit- oder Metallbestandteile insbesondere dunkle Farbpartikel zuzumischen, so daß die vorgenannten Sensoren des Vorhandensein von faden- oder tropfenförmigen Befestigungsmitteln 8; 16; 18, 19, 21 auf Grund der Farbunterschiede zum Bedruckstoff bzw. zum Druckerzeugnis erkennen können und somit die bereits beschriebenen Schaltvorgänge auslösen können. Es ist ebenso möglich, dem Heißschmelzkleber 15 andere sensorisch erfaßbare Materialien beizumengen. Diese trifft auch für die Fäden aus Fasermaterial zu.

### Teileliste

- 1: -
- 2: Lage, erste (1)
- 6: Anfang
- 7: Verbindungsklebemittel, streifenförmig
- 8: Fadenform, Faden
- 9: Lage, zweite
- 10: -
- 11: Längsachse (8)
- 14: Sollreißstelle (8)
- 15: Heißschmelzkleber
- 16: Tropfen
- 17: -
- 18: Tropfen
- 19: Tropfen
- 20: -
- 21: Fäden
- C: Transportrichtung
- a: Abstand (7; 6)
- b: Abstand (8, 8; 16, 16)
- d: Durchmesser (16)
- g: Abstand (18, 19)

## Patentansprüche

1. Vorratspapierbahnrolle, die zum Verbinden mit einer Papierbahn einer ablaufenden Papierbahnrolle vorbereitet ist, wobei der Anfang der ersten Lage der Papierbahn mittels eines Befestigungsmittels auf der zweiten Lage der Papierbahn befestigt ist und wobei parallel zum Anfang der ersten Lage der Papierbahn ein streifenförmiges Verbindungsklebemittel für das Verbinden des Anfanges der Vorratspapierbahnrolle mit der Papierbahn der ablaufenden Papierbahnrolle angeordnet ist, dadurch gekennzeichnet, daß das Befestigungsmittel (8; 16; 18; 19; 21) durch Tropfen (8; 16; 18; 19) oder Fäden (21) den Anfang (6) mit der zweiten Lage (9) verbindet und daß die Tropfen (8; 16; 18; 19) oder Fäden (21) keramische Ferrit-, Metall- oder Farbbestandteile aufweisen.

2. Vorratspapierbahnrolle nach Anspruch 1, dadurch gekennzeichnet, daß die Tropfen (8; 16; 18; 19) oder Fäden (21) aus bei Raumtemperatur zügig erstarrendem Material (15) bestehen.

3. Vorratspapierbahnrolle nach den Ansprüchen 1 und 2, dadurch gekennzeichnet, daß das bei Raumtemperatur zügig erstarrende Material (15) aus Heißschmelzkleber (15) besteht.

4. Vorratspapierbahnrolle nach Anspruch 1, dadurch gekennzeichnet, daß jeder Faden (21) aus Fasermaterial besteht.

5. Vorratspapierbahnrolle nach den Ansprüchen 1 und 4, dadurch gekennzeichnet, daß jedem Faden (21) zumindest eine Metalleinlage zugeordnet ist.

## Claims

1. Paper web supply roll, which is prepared for joining to a paper web of a paper web roll which is running out, the leading end of the first layer of the paper web being attached to the second layer of the paper web by means of an attaching means, and a strip-shaped joining adhesive for joining the leading end of the paper web supply roll to the paper web of the paper web roll which is running out is arranged parallel to the leading end of the first layer of the paper web, characterized in that the attaching means (8; 16; 18; 19; 21) joins the leading end (6) to the second layer (9) by drops (8; 16; 18; 19) or threads (21), and in that the drops (8; 16; 18; 19) or threads (21) have ceramic ferrite, metal or colour constituents.

2. Paper web supply roll according to Claim 1, characterized in that the drops (8; 16; 18; 19) or threads (21) consist of material (15) which sets rapidly at room temperature.

3. Paper web supply roll according to Claims 1 and 2, characterized in that the material (15) which sets rapidly at room temperature consists of hot-melt adhesive (15).

4. Paper web supply roll according to Claim 1, characterized in that each thread (21) consists of fibrous material.

5. Paper web supply roll according to Claims 1 and 4, characterized in that at least one metal insert is associated with each thread (21).

## Revendications

1. Bobine de réserve de papier en bande qui est préparée pour être reliée à une bande de papier d'une bobine de papier en bande finissante, le début de la première couche de la bande de papier étant fixé à la seconde couche de la bande de papier à l'aide d'un moyen de fixation, et un agent adhésif de liaison en forme de ruban pour relier le début de la bobine de réserve de papier en bande à la bande de papier de la bobine de papier en bande finissante étant disposé parallèlement au début de la première couche de la bande de papier, caractérisée en ce que le moyen de fixation (8 : 16 ; 18, 19, 21) relie le début (6) à la seconde couche (9) par l'intermédiaire de gouttes (8 ; 16 ; 18 : 19) ou de fils (21), et en ce que les gouttes (8 ; 16 ; 18 ; 19) ou les fils (21) renferment des composants céramiques ferritiques, métalliques ou colorés.

2. Bobine de réserve de papier en bande selon la revendication 1, caractérisée en ce que les gouttes (8 ; 16 ; 18 ; 19) ou les fils (21) sont réalisées dans une matière (15) à solidification rapide à température ambiante.

3. Bobine de réserve de papier en bande selon les revendications 1 et 2, caractérisée en ce que la matière (15) à solidification rapide à température ambiante est constituée d'adhésif fusible (15).

4. Bobine de réserve de papier en bande selon la revendication 1, caractérisée en ce que chaque fil (21) est réalisé en matériau fibreux.

5. Bobine de réserve de papier en bande selon les revendications 1 et 4, caractérisée en ce qu'à chaque fil (21) est associée au moins une âme métallique.
